# EUROPÄISCHE PATENTSCHRIFT

(11) **EP 1 514 032 B1**
(45) Veröffentlichungstag und Bekanntmachung des Hinweises auf die Patenterteilung: **21.01.2009**
(21) Anmeldenummer: 03759861.2
(22) Anmeldetag: 16.06.2003
(51) Int. Cl.: F16C 11/06

(54) **ZWEI-KOMPONENTEN LAGERSCHALE FÜR EIN UMSPRITZTES KUGELGELENK**
TWO-PIECE BEARING SHELL FOR A MOULDED BALLJOINT
COQUILLE DE COUSSINET A DEUX COMPOSANTS POUR JOINT A ROTULE GAINE PAR EXTRUSION

(30) Priorität: 17.06.2002 DE 10227014
(43) Veröffentlichungstag der Anmeldung: 16.03.2005
(73) Patentinhaber: ZF Lemförder Metallwaren AG, 49448 Lemförde (DE)
(72) Erfinder: BUDDE, Frank, 49401 Damme (DE); RECHTIEN, Martin, 49434 Neuenkirchen-Vörden (DE)
(86) Internationale Anmeldenummer: PCT/DE2003/002019
(87) Internationale Veröffentlichungsnummer: WO 2003/106851

(56) Entgegenhaltungen:
- WO-A-99/28639
- DE-A- 4 108 219
- DE-B- 1 099 868
- DE-U- 29 617 276

## Beschreibung

Die vorliegende Erfindung betrifft eine Lagerschale für ein Kugelgelenk insbesondere für Kraftfahrzeuge, ein Kugelgelenk sowie ein Verfahren zur Herstellung der Lagerschale gemäß den Merkmalen der Oberbegriffe der Ansprüche 1, 7 bzw. 11.

Ein Verfahren zur Herstellung einer Lagerschale für ein Kugelgelenk ist aus der DE 41 08 219 C2 bekannt. Die DE 41 08 219 C2 beschreibt ein 2-Komponenten-Verfahren, bei dem zunächst eine Gleitschicht auf eine Gelenkkugel aufgebracht wird. In einem weiteren besonders dafür geeigneten Arbeitsgang wird auf diese Schicht eine weitere Schicht, bestehend aus einem Fasergeflecht, aufgebracht. Danach wird der so zweifach beschichtete Kugelzapfen in eine Montagevorrichtung eingesetzt, die dann in das Gehäuse des Kugelgelenkes eingesetzt wird. Der Zweikomponenten-Kunststoff wird eingespritzt, so dass dieser das an der Oberfläche der Gelenkkugel anliegende Fasergeflecht in sich einbettet und nach Auskühlung in dieser Kombination eine Lagerschale bildet. In diesem Verfahren ist vor Einspritzung des Kunststoffes zusätzlich eine Vormontage des Wulstrandes des Dichtungsbalges in das Gehäuse notwendig. Nach dem Aushärten des Kunststoffes wird das Kugelgelenk aus der Vorrichtung entfernt und mit einem Deckel verschlossen. Nachteilig bei diesem Verfahren ist der erhebliche Montageaufwand, wodurch die Herstellung zeitaufwendig, teuer und fehleranfällig ist. Auch der zur Aufbringung des Fasergeflechts notwendige separate Arbeitsgang verursacht zusätzliche Kosten.

Lagerschalen für Kugelgelenke insbesondere für Kraftfahrzeuge sind ferner aus der DE 296 17 276 U1 bekannt. Die DE 296 17 276 U1 offenbart ein in einem 1-Komponenten-Verfahren umspritztes Kugelgelenk, bei dem die Lagerschale aus einem Kunststoff spritzgusstechnisch erzeugt wird. Aus dieser Bauweise ergibt sich in der Praxis das Problem, dass bei Einsatz eines relativ günstigen Kunststoffes dieser entweder in unverstärkter Form tribologisch gut geeignet ist, dann jedoch keine genügende Festigkeit aufweist, oder nur dann gute Festigkeitseigenschaften besitzt, wenn er eine Faserverstärkung aufweist. Durch Letztere büßt der Kunststoff allerdings seine guten tribologischen Eigenschaften ein. Abhilfe könnte ein Werkstoff mit guten mechanischen und gleichzeitig guten tribologischen Werkstoffeigenschaften schaffen, der jedoch sehr teuer ist.

Es ist deshalb Aufgabe der vorliegenden Erfindung, eine Lagerschale für ein Kugelgelenk bereitzustellen, welche gute mechanische und tribologische Werkstoffeigenschaften bei geringen Materialkosten aufweist. Ebenso ist es Aufgabe der vorliegenden Erfindung, ein Verfahren zur Herstellung der erfindungsgemäßen Lagerschale bereitzustellen.

Diese Aufgaben werden erfindungsgemäß mit einer Lagerschale sowie einem Verfahren gemäß den Merkmalen der Ansprüche 1 bzw. 11 gelöst.

Die erfindungsgemäße Lagerschale weist zwei Komponenten auf, eine Mantelkomponente, die die tribologischen Eigenschaften (Eigenschaften, die Reibung und Verschleiß betreffen) der Lagerschale bestimmt, und eine Kernkomponente innerhalb der Mantelkomponente, die die mechanischen Eigenschaften wie z.B. Kriecheigenschaften, Festigkeit, Zähigkeit usw. der Lagerschale bestimmt. Die Mantelfläche ist vorteilhaft derart ausgebildet, dass sie eine hochwertige tribologische Außenreibschicht für eine Gelenkkugel und gleichzeitig auch am Kugelgelenkgehäuse bildet. Das Innere der Mantelkomponente ist vorteilhaft mit einer preiswerteren Kernkomponente gefüllt. So wird eine Materialkostenersparnis bei gleichzeitiger Erhöhung der Lebensdauer des Kugelgelenks aufgrund der geringeren Reibung an der Außenreibschicht erreicht, ohne Einbußen der mechanischen Werkstoffeigenschaften in Kauf nehmen zu müssen. Durch in einem separaten Arbeitsschritt vorausgehendes zusätzliches Beschichten des Kugelzapfens mit Fluorkunststoffen, Gleitlacken und/oder anderen tribologisch geeigneten Schichten können die tribologischen Eigenschaften der Lagerschale weiter gesteigert und damit die Lebensdauer noch mehr erhöht werden.

Vorteilhaft kann an die Lagerschale im oberen Bereich ein nach außen gerichteter umlaufender Kragen angeformt sein, der zusammen mit dem Kugelgelenkgehäuse eine umlaufende Nut bildet. So kann die Montage des Dichtungsbalges wesentlich vereinfacht werden, da sie hierdurch zu einem beliebigen Zeitpunkt erfolgen kann.

Das Verfahren zur Herstellung der erfindungsgemäßen Lagerschale beginnt mit einem Einsetzen der Gelenkkugel in das Kugelgelenkgehäuse. Zusammen mit einem aufgesetzten mindestens zweigeteilten Werkzeug bilden Gelenkkugel und Gelenkgehäuse eine Kavität, in die zunächst ein erster Kunststoff so eingespritzt wird, dass die Kavität teilweise gefüllt ist. In diesen ersten Kunststoff wird dann ein zweiter Kunststoff so eingespritzt, dass die Kavität vollständig gefüllt ist. Durch diesen Koinjektions-Prozess (Sandwich-Spritzgießen) und infolge der Fließeigenschaften der beiden Kunststoffe (Quellfluss) überströmt der erste Kunststoff die Einlageteile der Kavität so, dass er die Mantelkomponente der Lagerschale bildet, und der zweite Kunststoff stellt die Kernkomponente dar. Nach dem Abkühlvorgang entsteht damit eine Lagerschale mit einem Kern und einem den Kern umschließenden Mantel, mit guten tribologischen und mechanischen Eigenschaften. Weitere Montageschritte sind prinzipiell nicht notwendig. Der Montageaufwand ist beim erfindungsgemäßen Verfahren sehr gering, wodurch sich kurze Prozesszeiten ergeben.

Die kostengünstigere Kernkomponente dient u.a. dazu, die Kavität vollständig zu füllen, wobei die Mantelkomponente gegen die Wandungen der Kavität gepresst wird. Durch Zusätze, wie z.B. Faserverstärkung wird die Schwindung des Kunststoffes während des Spritzgießprozesses reduziert und so die durch Abkühlung hervorgerufene Änderung des Volumens verringert. Zusätzlich kann die verstärkte Kernkomponente mit einem Treibmittel versehen werden, um damit eine gleichmäßige Schwindung ohne Einfallstellen, Lunker oder Verzug zu erzielen.

Um die Volumenkontraktion der Kunststoffe während des Abkühlvorgangs zusätzlich auszugleichen, kann es von Vorteil sein, Kugelzapfen und/oder das Gehäuse vor und/oder während des Einspritzens und/oder eine Zeit nach dem Einspritzvorgang durch eine Heizung zu erwärmen bzw. abzukühlen. Die Handhabung für einen Einsatz von Faserverstärkungen wird dadurch, dass der Verzug verringert bzw. vermieden wird, vereinfacht.

Im folgenden werden mögliche Ausführungsbeispiele der Erfindung anhand von Zeichnungen näher erläutert.

Es zeigen:
- Figur 1:: Ein Kugelgelenk mit Teilfüllung der Kavität;
- Figur 2:: ein Kugelgelenk gemäß Fig. 1 mit vollständig gefüllter Kavität;
- Figur 3:: eine Verfahrensvariante zur Herstellung von Kugelgelenken mit planer Stirnfläche;
- Figur 4:: Schnitt A-A durch das Kugelgelenk nach Figur 3;
- Figur 5:: Erstellung des Kugelgelenkgehäuses durch mechanisches Umformen.

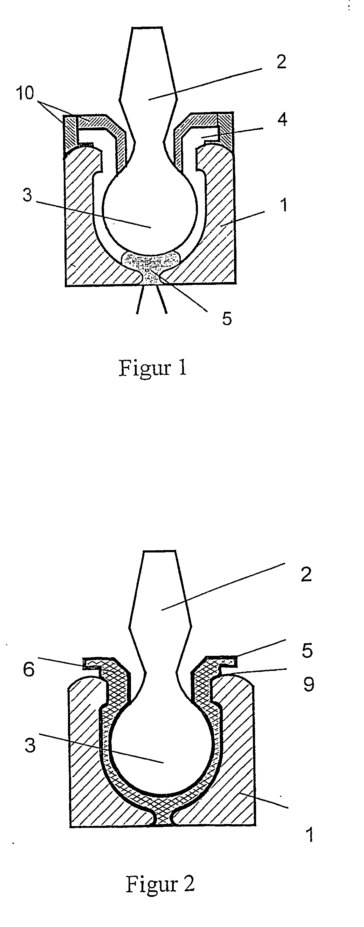

In Figur 1 ist ein Kugelgelenk in einem Querschnitt dargestellt. Ein vorgefertigtes Kugelgelenkgehäuse 1 wird in ein nicht dargestelltes Spritzgusswerkzeug eingesetzt. Ein Kugelzapfen 2, der mit einer gut geeigneten tribologischen Reibschicht beschichtet sein kann, wird im Kugelgelenkgehäuse 1 so positioniert, dass die am Ende des Kugelzapfens 2 ausgeformte Gelenkkugel 3 das Gehäuse nicht berührt. Kugelzapfen 2,3 und Gehäuse 1 werden mit einem geteilten Werkzeug 10 abgedichtet und bilden gemeinsam eine Kavität. Die entstehende Kavität 4 wird mit einer ersten Komponente 5 teilweise gefüllt. Durch Nachschieben einer zweiten Komponente 6 wird die Kavität vollständig gefüllt (Figur 2). Wegen des Quellflusses der Kunststoffe umströmt die erste Komponente 5 als Mantelkomponente die Einlageteile während die zweite Komponente 6 als Kernkomponente den sich bildenden Hohlraum innerhalb der Mantelkomponente füllt. Nach dem Abkühlen der Kunststoffmassen entsteht eine aus Mantel- und Kernkomponente zusammengesetzte Lagerschale 5, 6.

Als Werkstoffe für die Kernkomponente kommen alle Thermoplaste mit günstigen mechanischen Eigenschaften in Frage. Die Verstärkung kann dabei z.B. aus Fasern, Glimmer, Mineralien oder Kugeln beispielsweise Glaskugeln (hohe Druckfestigkeit) bestehen.

Die Mantelkomponente besteht bevorzugt aus unverstärkten Thermoplasten insbesondere mit geeigneten tribologischen Zusätzen. Als vorteilhafte Kunststoffe haben sich Polyamid (PA), Polyoxymethylen (POM), Polyetheretherketon (PEEK), Polyphenylensulfid (PPS), Polyetherimid (PEI) und Polysulfon erwiesen. Geeignete tribologische Zusätze sind Fluorkunststoffe wie z.B. Polytetrafluorethylen (PTFE), Perfluoralkoxy-Copolymerisat (PFA), Perfluorpolyether (PFPE), Graphit, Silikonöl, weitere Reibadditive oder Wachse.

Der Einsatz von Duroplasten ist ebenfalls denkbar. Mantel- und Kernkomponente können aus dem gleichen Kunststoff bestehen und nur durch entsprechende Modifikationen Unterschiede aufweisen, z.B. PA 6.6 unverstärkt als Mantelkomponente und PA 6.6 GF60 als Kernkomponente.

Für die optionale Beschichtung des Kugelzapfens können alle Fluorkunststoffe wie z.B. Polytetrafluorethylen (PTFE), Perfluoralkoxy-Copolymerisat (PFA), Perfluorethylenpropylen (FEP) oder Polychlortrifluorethylen (PCTFE) eingesetzt werden.

Durch geeignete Form der Kavität kann an die Lagerschale im oberen Bereich ein nach außen gerichteter umlaufender Kragen angeformt sein, der zusammen mit dem Kugelgelenkgehäuse 1 nach Abformung eine umlaufende Nut 9 bildet, die dazu dient, einen Dichtungsbalg befestigen zu können.

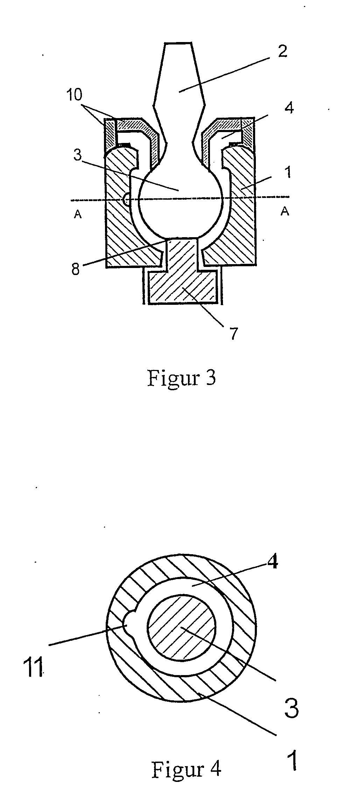

In Figur 3 ist alternativ ein Verfahren zur Herstellung einer Lagerschale für Gelenkkugeln 3 mit einem abgeflachten Pol 8 dargestellt, welcher häufig bei derdrehenden Herstellung der Gelenkkugel durch das abschließende Abstechen vom Rohmaterial entsteht. Um trotz abgeflachten Pols der Gelenkkugel eine leichte Beweglichkeit ohne zusätzlichen Verschleiß zu gewährleisten, wird ein Formstempel 7 gegen den abgeflachten Pol der Gelenkkugel 8 gedrückt. Bei der anschließenden erfindungsgemäßen Befüllung der Kavität wird der Bereich des abgeflachten Pols nicht mehr mit ausgespritzt und somit die Beweglichkeit erhalten. Die Position des Angussees ist lediglich beispielsweise dargestellt und kann durch andere, beim Spritzguss bekannte Angusspositionen ersetzt werden.

Figur 4 zeigt einen Schnitt A-A gemäß Figur 3. Zur formschlüssigen Sicherung gegen Verdrehen der Lagerschale ist die innere Wand des die Kavität mitbildenden Kugelgelenkgehäuses 1 mit einem Rücksprung 11 versehen, in den sich die eingespritzten Kunststoffe einlagern, wodurch sich nach Aushärtung der Kunststoffe eine formschlüssige Sicherung gegen Verdrehen ergibt.

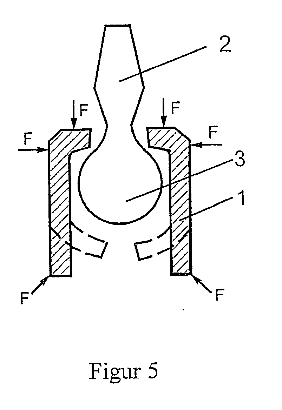

Aufgrund der im Betrieb des Kugelgelenkes auftretenden hohen Belastung ist es vorteilhaft, die Lagerschale im oberen Bereich der Gelenkkugel zusätzlich mit dem Material des Kugelgelenkgehäuses zu unterstützen und so die Gefahr eines Herausrutschen des Kugelgelenkzapfens bzw. der Gelenkkugel aus dem Gelenk zu verringern. Um diese Hinterschneidung der Gelenkkugel zu erreichen, wird gemäß Figur 5 über den Gelenkzapfen ein Kugelgelenkgehäuse z.B. in Form einer Hülse geschoben, die den oberen Bereich der Gelenkkugel nahezu vollständig umgreift und zur Montage nach unten offen ausgebildet ist. Durch mechanisches Umformen, welches im Spritzgießwerkzeug selbst oder durch einen vorgelagerten Schritt erfolgen kann, wird der untere Teil des hülsenförmigen Kugelgelenkgehäuses so weit mit der/den KrafdKräften F zusammengedrückt, bis die entstehende Öffnung die zum anschließenden spritzgießprozess erforderliche Größe erreicht hat. Alternativ könnte das Kugelgelenkgehäuse im oberen Bereich der Gelenkkugel offen gestaltet sein und nach Einführung der Gelenkkugel mittels der Kraft F, welche durch das Spritzgießwerkzeug selbst oder durch einen vorgelagerten Schritt aufgebracht werden kann, zusammengedrückt werden.

### Bezugszeichenliste

- 1: Kugelgelenkgehäuse
- 2: Kugelzapfen
- 3: Gelenkkugel
- 4: Kavität
- 5: erste Komponente
- 6: zweite Komponente
- 7: Formstempel
- 8: abgeflachter Pol der Gelenkkugel
- 9: umlaufende Nut
- 10: zweigeteiltes Werkzeug
- 11: Rücksprung zur Sicherung gegen Verdrehen

## Patentansprüche

1. Lagerschale für ein Kugelgelenk, **dadurch gekennzeichnet,**
**dass** die Lagerschale (5,6) eine Kernkomponente (6) aus einem ersten Material aufweist, die von einer Mantelkomponente (5) aus einem zweiten Material vollständig umfasst ist.

2. Lagerschale nach Anspruch 1, **dadurch gekennzeichnet,**
**dass** die Kernkomponente (6) aus einem verstärken thermoplastischen Polymer besteht, wobei die Verstärkung insbesondere durch Fasern, Glimmer, Mineralien oder Kugeln, beispielsweise Glaskugeln, erfolgt.

3. Lagerschale nach Anspruch 1 oder 2, **dadurch gekennzeichnet,**
**dass** die Mantelkomponente (5) aus einem insbesondere unverstärkten thermoplastischen Polymer, insbesondere Polyamid (PA), Polyoxymethylen (POM), Polyetheretherketon (PEEK), Polyphenylensulfid (PPS), Polyetherimid (PEI) oder Polysulfon (PSU) mit geeigneten tribologischen Zusätzen ist.

4. Lagerschale nach Anspruch 3, **dadurch gekennzeichnet,**
**dass**, die geeigneten tribologischen Zusätze Fluorkunststoffe wie z.B. Polytetrafluorethylen (PTFE), Perfluoralkoxy-Copolymerisat (PFA), Perfluorpolyether (PFPE), Graphit, Silikonöl, weitere Reibadditive oder Wachse sind.

5. Lagerschale nach Anspruch 1 bis 4, **dadurch gekennzeichnet,**
**dass** die Lagerschale im oberen Bereich außen eine umlaufende Nut (9) oder Nutabschnitte und/oder Einbuchtungen zur Befestigung eines Dichtungsbalges besitzt.

6. Lagerschale nach einem der Ansprüche 1 bis 5 **dadurch gekennzeichnet, dass** die Lagerschale im Kugelgelenkgehäuse formschlüssig gegen Verdrehen gesichert ist;

7. Kugelgelenk unter Verwendung einer Lagerschale (5, 6) nach einem der vorhergehenden Ansprüche.

8. Kugelgelenk nach Anspruch 7, **dadurch gekennzeichnet,**
**dass** der Kugelzapfen (2) beschichtet ist.

9. Kugelgelenk nach Anspruch 7 oder 8, **dadurch gekennzeichnet,**
**dass** die Beschichtung des Kugelzapfens (2) aus Fluorpolymeren, insbesondere Polytetrafluorethylen (PTFE), Perfluoralkoxy Copolymerisat (PFA), Perfluorethylenpropylen (FEP) oder Polychlortrifluorethylen (PCTFE), Gleitlacken oder anderen tribologisch geeigneten Schichten besteht.

10. Kugelgelenk nach einem der Ansprüche 7 bis 9, **dadurch gekennzeichnet,**
**dass** das Kugelgelenkgehäuse nach dem Einsetzen der Gelenkkugel derart verformt wird, dass die Gelenkkugel über einen großen Winkelbereich insbesondere von 250° bis 320° vom Kugelgelenkgehäuse umgriffen wird.

11. Verfahren zur Herstellung einer Lagerschale (5, 6) für ein Kugelgelenk, wobei in einem ersten Verfahrensschritt die Gelenkkugel (3) in eine Kavität (4) eingesetzt wird, **dadurch gekennzeichnet,**
**dass** in einem nachfolgenden Verfahrensschritt ein erster polymerer Werkstoff (5) in die Kavität eingespritzt und in einem weiteren Verfahrensschritt ein zweiter polymerer Werkstoff (6) in den ersten Werkstoff eingespritzt wird.

12. Verfahren nach Anspruch 11, **dadurch gekennzeichnet,**
**dass** der zuerst eingespritzte Polymer (5) als Mantelkomponente und der zweite eingespritzte Polymer (6) als Kernkomponente dient, wobei die Volumenanteile von Mantel- und Kernkomponente beliebig einstellbar sind, insbesondere das Volumen der Mantelkomponente geringer als das der Kernkomponente ist, sodass insbesondere der Mantel dünnwandig ausgebildet ist.

13. Verfahren nach Anspruch 11 oder 12, **dadurch gekennzeichnet,**
**dass** die Kavität (4) zumindest zum Teil oder vollständig durch das Kugelgelenkgehäuse (1) gebildet ist.

14. Verfahren nach einem der Ansprüche 11 bis 13, **dadurch gekennzeichnet,**
**dass** Kugelzapfen (2) und/oder Kugelgelenkgehäuse (1) vor und/oder während des Einspritzens und/oder eine Zeit nach dem Einspritzvorgang der Materialien für die Lagerschale (5, 6) aufgeheizt bzw. auf eine vorbestimmte Temperatur eingeregelt werden.

## Claims

1. Bearing shell for a ball joint, **characterised in that** the bearing shell (5, 6) comprises a core component (6) of a first material which is completely enclosed by a jacket component (5) of a second material.

2. Bearing shell according to Claim 1, **characterised in that** the core component (6) consists of a reinforced thermoplastic polymer, wherein the reinforcement is in particular effected through fibres, mica, minerals or spheres, for example glass spheres.

3. Bearing shell according to Claim 1 or 2, **characterised in**
**that** the jacket component (5) consists in particular of a non-reinfbrced thermoplastic polymer, in particular polyamide (PA), polyoxymethylene (POM), polyether ether ketone (PEEK), polyphenylene sulfide (PPS), polyether imide (PEI) or polysulfone (PSU) with suitable tribological additives.

4. Bearing shell according to Claim 3, **characterised in that** the suitable tribological additives are fluoroplastics such as, e.g. polytetrafluoroethylene (PTFE), perfluoroalkoxy copolymer (PFA), perfluoropolyether (PFPE), graphite, silicone oil, further friction additives or waxes.

5. Bearing shell according to Claims 1 to 4,
**characterized in that** the bearing shell has an all-round groove (9) or groove sections and/or indentations in the upper region for fastening sealing bellows.

6. Bearing shell according to any one of Claims 1 to 5, **characterised in**
**that** the bearing shell is positively secured against twisting in the ball joint housing.

7. Ball joint using a bearing shell (5, 6) according to any one of the preceding Claims.

8. Ball joint according to Claim 7, **characterised in that** the ball pin (2) is coated.

9. Ball joint according to Claim 7 or 8, **characterised in that** the coating of the ball pin (2) consists of fluoropolymers, in particular polytetrafluoroethylene (PTFE), perfluoroalkoxy copolymer (PFA), perfluoroethylene propylene (FEP) or polychlorotrifluoroethylene (PCTFE), lubricating lacquers or other tribologically suitable layers.

10. Ball joint according to any one of Claims 7 to 9, **characterised in**
**that** the ball joint housing is deformed following the insertion of the joint ball such that the joint ball is encompassed by the joint ball housing over a large angular range, in particular from 250° to 320°.

11. Method for producing a bearing shell (5, 6) for a ball joint, wherein the joint ball (3) is inserted in a cavity (4) in a first method step, **characterised in**
**that** a first polymeric material (5) is injected into the cavity in a subsequent method step and a second polymeric material (6) is injected into the first material in a further method step.

12. Method according to Claim 11, **characterised in that** the polymer (5) which is injected first serves as a jacket component and the second injected polymer (6) as a core component, wherein the volumetric proportions of the jacket and core component can be adjusted as desired, the volume of the jacket component is in particular smaller than that of the core component, so that the jacket is in particular of thin-walled formation.

13. Method according to Claim 11 or 12, **characterised in that** the cavity is formed at least in part or completely by the ball joint housing (1).

14. Method according to any one of Claims 11 to 13, **characterised in**
**that** the ball pin (2) and/or the ball joint housing (1) are/is heated or adjusted to a predetermined temperature prior to and/or during injection and/or a time following the injection of the materials for the bearing shell (5, 6).

## Revendications

1. Coquille de coussinet pour joint à rotule, **caractérisée en ce que** la coquille de coussinet (5, 6) présente un composant central (6) formé d'un premier matériau, qui est complètement entouré d'un composant d'enveloppe formé d'un deuxième matériau.

2. Coquille de coussinet selon la revendication 1, **caractérisée en ce que** le composant central (6) est constitué d'un polymère thermoplastique renforcé, dans laquelle le renfoncement se fait en particulier avec des fibres, du mica, des minéraux ou des billes, par exemple des billes de verre.

3. Coquille de coussinet selon la revendication 1 ou 2, **caractérisée en ce que** le composant d'enveloppe (5) est constitué d'un polymère thermoplastique en particulier non renforcé, tout particulièrement un polyamide (PA), du polyoxyméthylène (POM), une polyétheréthercétone (PEEK), du poly(sulfure de phénylène) (PPS), un polyétherimide (PEI) ou une polysulfone (PSU) avec des additifs tribologiques appropriés.

4. Coquille de coussinet selon la revendication 3, **caractérisée en ce que** les additifs tribologiques appropriés sont des matières plastiques fluorées, telles que le polytétrafluoréthylène (PTFE), un copolymère de perfluoroalcoxyle (PFA), un perfluoropolyéther (PFPE), du graphite, de l'huile de silicone, d'autres additifs modifiant le frottement ou des cires.

5. Coquille de coussinet selon les revendications 1 à 4, **caractérisée en ce que** la coquille de coussinet possède, dans la zone supérieure, à l'extérieur, une rainure périphérique (9) ou des segments de rainure et/ou des indentations pour fixer un soufflet d'étanchéité.

6. Coquille de coussinet selon l'une quelconque des revendications 1 à 5, **caractérisée en ce que** la coquille de coussinet dans le boîtier du joint à rotule est protégée mécaniquement contre une torsion.

7. Joint à rotule utilisant une coquille de coussinet (5, 6) selon l'une quelconque des revendications précédentes.

8. Joint à rotule selon la revendication 7, **caractérisé en ce que** le pivot (2) est revêtu.

9. Joint à rotule selon la revendication 7 ou 8, **caractérisé en ce que** le revêtement du pivot (2) est constitué de polymères fluorés, en particulier du polytétrafluoréthylène (PTFE), du copolymère de perfluoroalcoxyle (PFA), du perfluoroéthylènepropylène (FEP) ou du polychlorotrifluoréthylène (PCTFE), de vernis lubrifiants ou d'autres couches appropriées ayant des propriétés tribologiques.

10. Joint à rotule selon l'une quelconque des revendications 7 à 9, **caractérisé en ce que** le boîtier du joint à rotule est déformé après l'insertion de la rotule du joint de sorte que la rotule du joint soit entourée, sur une grande zone d'angle en particulier de 250 ° à 320 °, par le boîtier du joint à rotule.

11. Procédé de fabrication d'une coquille de coussinet (5, 6) pour un joint à rotule, dans lequel, dans une première étape du procédé, la rotule (3) du joint est insérée dans une cavité (4), **caractérisé en ce que**, dans une étape de procédé suivante, on injecte un premier matériau polymère (5) dans la cavité et, dans une autre étape du procédé, on injecte un deuxième matériau polymère (6) dans le premier matériau.

12. Procédé selon la revendication 11, **caractérisé en ce que** le polymère d'abord injecté (5) sert de composant d'enveloppe et le deuxième polymère injecté (6) sert de composant central, dans lequel les fractions volumiques du composant d'enveloppe et du composant central peuvent être réglées de manière quelconque, en particulier le volume du composant d'enveloppe est inférieur à celui du composant central si bien que l'enveloppe présente en particulier une paroi mince.

13. Procédé selon la revendication 11 ou 12, **caractérisé en ce que** la cavité (4) est au moins en partie ou complètement formée par le boîtier (1) du joint à rotule.

14. Procédé selon l'une quelconque des revendications 11 à 13, **caractérisé en ce que** le pivot (2) et/ou le boîtier du joint à rotule (1) est ou sont chauffés avant et/ou pendant l'injection et/ou un moment après l'opération d'injection des matériaux pour la coquille de coussinet (5, 6) ou ajustés à une température prédéterminée.
